Europäisches Patentamt

European Patent Office

Office européen des brevets

(19)

(11) Veröffentlichungsnummer: **0 176 810 B1**

# (12) EUROPÄISCHE PATENTSCHRIFT

(45) Veröffentlichungstag der Patentschrift: **11.09.91**

(51) Int. Cl.⁵: **B01D 29/74**, B01D 33/21

(21) Anmeldenummer: **85111357.1**

(22) Anmeldetag: **09.09.85**

(54) Verfahren und Vorrichtung zum Entfernen des Filterkuchens aus einem Scheiben-Druckfilter.

(30) Priorität: **27.09.84 DE 3435485**

(43) Veröffentlichungstag der Anmeldung:
**09.04.86 Patentblatt 86/15**

(45) Bekanntmachung des Hinweises auf die
Patenterteilung:
**11.09.91 Patentblatt 91/37**

(84) Benannte Vertragsstaaten:
**DE NL**

(56) Entgegenhaltungen:
**EP-A- 0 033 370**
**CH-A- 370 830**
**CH-A- 494 585**

(73) Patentinhaber: **HOECHST AKTIENGESELL-**
**SCHAFT**
**Postfach 80 03 20**
**W-6230 Frankfurt am Main 80(DE)**

(72) Erfinder: **Bongaerts, Christiaan Henricus M.**
**Doornenburg 39**
**NL-4385 EJ Vlissingen(NL)**
Erfinder: **Lagendijk, Arie**
**Vlissingsestraat 71**
**NL-4388 HB-Oost-Souburg(NL)**
Erfinder: **Riemens, Jacobus Eliza**
**Beatrixstraat 71**
**NL-4361 EG Westkapelle(NL)**
Erfinder: **von Schenck, Raban, Dr.**
**Ulmenstrasse 34**
**W-6238 Hofheim(DE)**

EP 0 176 810 B1

# Beschreibung

Die vorliegende Erfindung betrifft ein Verfahren zum Entfernen von bei der Filtration von Suspensionen aus der Fällungsreinigung von Naßphosphorsäure angefallenem Filterkuchen von den Scheiben eines Druckfilters mit Zentrifugal-Kuchenaustrag, wobei die Scheiben des Druckfilters mittels eines Drehstromasynchronmotors in Rotation versetzt werden, sowie eine Vorrichtung zu seiner Durchführung.

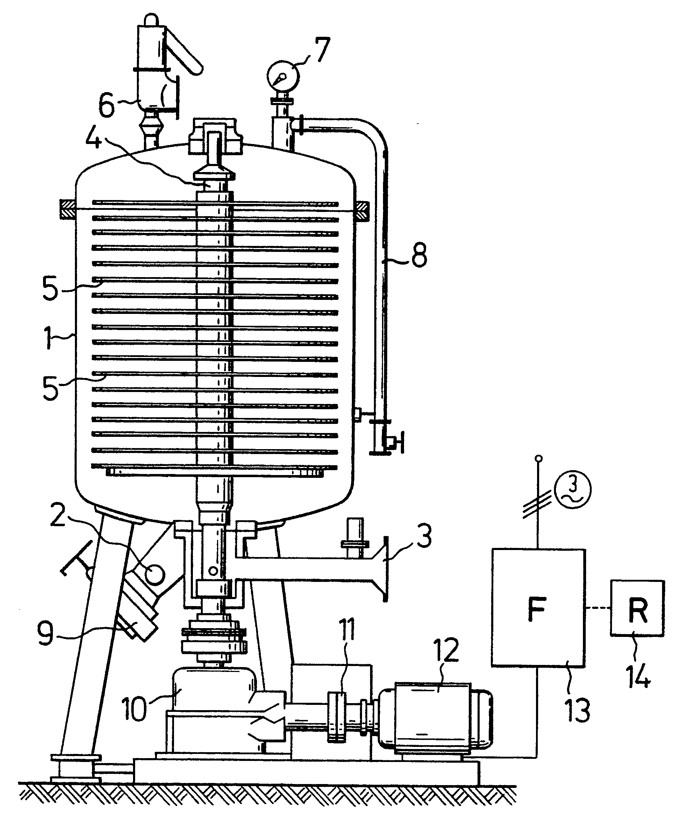

Es ist bekannt, zur Filtration von Erdalkali- und Schwermetallphosphaten, wie sie bei der Neutralisation von Naßphosphorsäure anfallen, Scheiben-Druckfilter zu verwenden. In diesem Verwendungsfall bedingen hohe Feststoffgehalte kurze Filtrationszyklen, so daß häufig Filterkuchen abgeschleudert werden muß. Um zu vermeiden, daß beim Rotationsbeginn der mit viel Filterkuchen belegten Scheiben der Überstromschütz des die Scheiben antreibenden Drehstrommotors anspricht, ist zwischen dem Drehstrommotor und dem Getriebe, durch welches die Scheiben in Rotation versetzt werden, eine Ölanlaufkupplung vorgesehen. Nach Beendigung der Anlaufphase rotieren die Scheiben entsprechend der Drehzahl gemäß der Bauart des Drehstrommotors (vergl. "Chemie-Technik", 7 (1978) Nr. 6, Seiten 239 bis 241, insbesondere Abb. 2).

Weiterhin ist es bekannt, daß die Änderung der Frequenz des elektrischen Stromes, mit welchem ein Drehstrommotor betrieben wird, eine proportionale Änderung der Drehzahl des Drehstrommotors bedingt (vergl. "Formel- und Tabellenbuch für Starkstrom-Ingenieure", 2. Auflage, 1960, Seite 231).

Nachteilig ist bei der Entfernung des Filterkuchens von den Scheiben des Druckfilters nach dem Stand der Technik, daß auch nach Abschleudern eines großen Teiles des Filterkuchens von den Scheiben deren Rotation wegen der bauartbedingten Drehzahl des Drehstrommotors nicht erhöht werden kann. Dabei wäre eine Erhöhung der Rotation der Scheiben wünschenswert, um auch Kuchenreste, welche sich insbesondere nahe dem Zentrum der Scheiben befinden, zu entfernen. Wenn solche nicht entfernten Kuchenreste anbakken, so wird dadurch nicht nur die Filterleistung reduziert, sondern beim folgenden Abschleudervorgang durch Unwuchten das Druckfilter mechanisch geschädigt.

Es ist daher Aufgabe der vorliegenden Erfindung, ein Verfahren zum Entfernen des Filterkuchens von den Scheiben eines Druckfilters mit Zentrifugal-Kuchenaustrag sowie eine Vorrichtung zu seiner Durchführung anzugeben, bei welchen die Erhöhung der Rotation der Scheiben nach Abschleudern eines großen Teiles des Filterkuchens ohne großen zusätzlichen maschinentechnischen Aufwand möglich ist. Das wird erfindungsgemäß dadurch erreicht, daß man einen zum Betreiben mit elektrischen Strom einer Frequenz von 50 Hz vorgesehenen, vierpoligen Drehstromasynchronmotor verwendet; daß man den Drehstromasynchronmotor in der 5 bis 15 Sekunden dauernden Anlaufphase mit elektrischen Strom einer Frequenz von 4 bis 7,5 Hz betreibt; und daß man in der 20 bis 40 Sekunden dauernden Endphase den Drehstromasynchronmotor zur Vergrößerung seiner Drehzahl mit elektrischen Strom einer Frequenz bis zu 67,5 Hz betreibt.

Das Verfahren gemäß der Erfindung kann wahlweise auch noch dadurch ausgestaltet sein, daß

a) man den Drehstromasynchronmotor in einer der Anlaufphase folgenden Zwischenphase mit elektrischen Strom einer Frequenz von 15 bis 50 Hz betreibt;

b) man den Drehstromasynchronmotor in einer der Endphase folgenden ersten Nachphase mit elektrischem Strom einer Frequenz von 15 bis 40 Hz betreibt;

c) man den Drehstromasynchronmotor in einer der ersten Nachphase folgenden zweiten Nachphase mit elektrischem Strom einer Frequenz bis zu 67,5 Hz betreibt;

d) die Frequenz zum Betreiben des Drehstromasynchronmotors in der Anlaufphase 5 bis 6 Hz beträgt;

e) die Zwischenphase 10 bis 20 Sekunden dauert;

f) die erste Nachphase 20 bis 50 Sekunden dauert;

g) die zweite Nachphase 10 bis 25 Sekunden dauert.

Eine Vorrichtung zur Durchführung des erfindungsgemäßen Verfahrens, die aus einem Druckbehälter mit Trübezulauf und Filtratablauf, einer im Druckbehälter zentrisch und vertikal angeordneten Filtratablaufwelle, an welcher eine Vielzahl von Scheiben horizontal und mit Abstand voneinander angeordnet sind, einem Austragsstutzen für Filterkuchen und einem Getriebe, welches einerseits mit dem unteren, aus dem Druckbehälter herausragenden Ende der Filtratablaufwelle kraftschlüssig und andererseits durch eine Kupplung mit einem Drehstromasynchronmotor verbunden ist, besteht, kann dadurch gekennzeichnet sein, daß die Kupplung eine starre Kupplung ist; daß der Drehstromasynchronmotor über einen Frequenzumformer mit elektrischem Strom beaufschlagbar ist; und daß der Frequenzumformer mit Hilfe eines Rechners mit elektrisch programmierbarem Speicher steuerbar ist.

Das erfindungsgemäße Verfahren erlaubt neben der Erhöhung der Rotation der Scheiben nach Abschleudern eines großen Teils des Filterkuchens auch beim Anlaufen der Scheiben die Aufnahme eines erforderlichen Schlupfes in den Drehstromasynchronmotor, indem durch die niedrige Frequenz der Anlaufstrom im wesentlichen mit dem Nominalstrom des Drehstromasynchronmotors identisch ist. Dadurch kann auf eine Ölanlaufkupplung zugunsten einer starren Kupplung verzichtet werden.

Das Verfahren gemäß der Erfindung ermöglicht eine so gründliche Abschleuderung des Filterkuchens von den Scheiben, daß die gelegentlich erforderliche Regenerierung der Oberfläche der auf den Scheiben aufgespannten Tücher nunmehr erst nach der mehr als zehnfachen Anzahl von Filtrationszyklen erforderlich wird. Da die Regenerierung der Tuchoberflächen bei Filterkuchen aus anorganischen Stoffen in der Regel durch Spülung des Filters mit Säuren erfolgt, ist die erhebliche Verringerung der erforderlichen Regenerierungen von besonderer Bedeutung, weil durch die Säurespülung auch die Wellendichtungen des Scheiben-Druckfilters angegriffen werden.

Bei der Vorrichtung zur Durchführung des erfindungsgemäßen Verfahrens wird als elektrisch programmierbarer Speicher ein EPROM (= elektrisch programmierbares ROM) verwendet. Dabei ist ein ROM (= Read only memory) ein Halbleiter-Speicherbaustein, aus dem vom Rechner Informationen nur gelesen, aber in den sie vom Rechner nicht hineingeschrieben werden können. Im Gegensatz zum ROM kann das Programm aus dem EPROM durch geeignete Maßnahmen wieder gelöscht und ein neues Programm mit Hilfe eines EPROM-PROGRAMMERs eingespeichert werden (vergl. "Nachrichten aus Chemie, Technik und Laboratorium" 32 (1984) Nr. 6, Seiten 518 und 519). Das EPROM ist derartig programmiert, daß die Drehzahl des die Scheiben in Rotation versetzenden Drehstromasynchronmotors als Funktion der Zeit eingestellt ist.

In der beigefügten Zeichnung ist eine Vorrichtung zur Durchführung des erfindungsgemäßen Verfahrens schematisch und teilweise im Schnitt dargestellt.

In einem Druckbehälter 1, welcher mit einem Trübezulauf 2 und einem Filtratablauf 3 versehen ist, befindet sich eine zentrisch und vertikal angeordnete Filtratablaufwelle 4. An der Filtratablaufwelle 4 sind als Filterelemente mehrere Scheiben 5 horizontal und mit Abstand voneinander angeordnet. Auf dem Deckel des Druckbehälters 1 sind ein Sicherheitsventil 6 und ein Manometer 7 mit Entlüftungsleitung 8 angeordnet. Unterhalb des Trübezulaufes 2 befindet sich ein Austragsstutzen 9 für Filterkuchen. Das untere, aus dem Druckbehälter 1 herausragende Ende der Filtratablaufwelle 4 ist kraftschlüssig mit einem Getriebe 10 verbunden, welches seinerseits durch eine starre Kupplung 11 mit einem Drehstromasynchronmotor 12 verbunden ist. Der Drehstromasynchronmotor 12 wird über einen Frequenzumformer 13 mit Dreiphasen-Strom beaufschlagt, wobei der Frequenzumformer 13 durch einen Rechner 14 mit einem elektronischen Speicher (EPROM), dessen Werte Drehzahlcharakteristiken in binärer Form sind, gesteuert wird.

Beispiel 1 (nach dem Stand der Technik)

Über ein Scheiben-Druckfilter mit Zentrifugal-Kuchenaustrag (Bauart: UHDE) mit einem Behälterinhalt von 3 m³ und 65 m² Filteroberfläche wurde eine Suspension filtriert, welche durch Neutralisation von Naßphosphorsäure mit Natronlauge erhalten worden war. Nachdem der Druck im Behälter auf 8 bar angestiegen war, wurde die Filtration abgebrochen.

Zur Entfernung des Filterkuchens wurden die Scheiben, welche mit Abstand voneinander an einer vertikalen Filtratablaufwelle befestigt waren, durch Drehen der Filtratablaufwelle in Rotation versetzt. Zum Drehen der Filtratablaufwelle diente ein vierpoliger Drehstromasynchronmotor mit einer Leistung von 45 KW und einer Drehzahl von 1500 r/min bei einer Frequenz von 50 Hz. Zwischen dem Drehstromasynchronmotor und der Filtratablaufwelle befanden sich ein Getriebe mit einem Übersetzungsverhältnis von 1 : 5 sowie eine Ölanlaufkupplung. Dadurch rotierten die Scheiben mit maximal 300 r/min. Bei dieser maximalen Umdrehungszahl blieben oft Filterkuchenreste zwischen den Scheiben, insbesondere in der Nähe der Filtratablaufwelle, zurück, was zur Verringerung der Standzeit des Druckfilters führte.

Um die Standzeit in wirtschaftlich vertretbarer Höhe zu halten, war es erforderlich, das Druckfilter nach jeweils 15 Filtrationszyklen mit 70 %iger Phosphorsäure mit einer Temperatur von 80° C zu spülen.

Beispiel 2 (gemäß der Erfindung)

Es wurde mit dem gleichen Scheiben-Druckfilter wie in Beispiel 1 die gleiche Filtration wie in Beispiel 1 durchgeführt.

Um die Scheiben des Druckfilters zur Entfernung des Filterkuchens in Rotation zu versetzen, diente zum Drehen der Filtratablaufwelle der gleiche Drehstromasynchronmotor und das gleiche Getriebe wie in Beispiel 1. Jedoch waren die Welle des Drehstromasynchronmotors und die Antriebswelle des Getriebes durch eine starre Kupplung verbunden (vergl. die Figur).

Der Drehstromasynchronmotor wurde aus einem Frequenzumformer (stromgesteuerter Monovertreter der Fa. AEG) mit elektrischem Strom beaufschlagt. Der Strom wies in der Anlaufphase eine Frequenz von etwa 5 Hz auf, wobei der Anlaufstrom 110 % des Nominalstromes betrug. Die Anlaufphase dauerte 10 Sekunden. In der Endphase wurde der Drehstromasynchronmotor während 40 Sekunden mit Dreiphasen-Strom einer Frequenz von etwa 60 Hz beaufschlagt, wodurch die Filtratablaufwelle und damit auch die Scheiben mit etwa 360 r/min rotierten.

Durch die gesteigerte Drehzahl wurde der Filterkuchen vollständiger von den Scheiben abgeschleudert, so daß es zur Aufrechterhaltung einer Standzeit in wirtschaftlich vertretbarer Höhe lediglich erforderlich war, das Druckfilter nach jeweils 150 Filtrationszyklen mit 70 %iger Phosphorsäure mit einer Temperatur von 80° C zu spülen.

Beispiel 3 (gemäß der Erfindung)

Beispiel 2 wurde mit der Änderung wiederholt, daß nach Beendigung der Anlaufphase der Drehstromasynchronmotor in der Zwischenphase mit elektrischem Strom einer Frequenz von etwa 40 Hz entsprechend einer Scheiben-Rotation von etwa 240 r/min während 15 Sekunden angetrieben wurde, ehe sich die Endphase anschloß.
Durch die dreimal veränderte Drehzahl der Scheiben wurde deren Abreinigung verbessert, so daß eine Spülung mit heißer Phosphorsäure erst nach 200 Filtrationszyklen erforderlich war.

Beispiel 4 (gemäß der Erfindung)

Beispiel 3 wurde mit der Ergänzung wiederholt, daß nach Beendigung der Endphase der Drehstromasynchronmotor in der ersten Nachphase mit elektrischem Strom einer Frequenz von etwa 25 Hz entsprechend einer Scheiben-Rotation von etwa 150 U/min während 40 Sekunden angetrieben wurde.

Durch die alternierende Drehzahl wurde eine weitere Verbesserung der Abreinigung der Scheiben erreicht, so daß eine Spülung mit heißer Phosphorsäure nunmehr erst nach 250 Filtrationszyklen erforderlich war.

Beispiel 5 (gemäß der Erfindung)

Beispiel 4 wurde mit der Ergänzung wiederholt, daß nach Beendigung der ersten Nachphase der Drehstromasynchronmotor in der zweiten Nachphase mit elektrischem Strom einer Frequenz von etwa 65 Hz entsprechend einer Scheiben-Rotation von etwa 390 U/min während 20 Sekunden angetrieben wurde.

Durch die zusätzliche Abschleuderung der Scheiben mit hoher Umdrehungszahl wurde die Abreinigung der Scheiben nochmals verbessert, so daß eine Spülung mit heißer Phosphorsäure schließlich erst nach 300 Filtrationszyklen erforderlich war.

Beispiel 6 (gemäß der Erfindung)

Beispiel 2 wurde mit den Ergänzungen wiederholt, daß nach Beendigung der Endphase der Drehstromasynchronmotor in der ersten Nachphase mit elektrischem Strom einer Frequenz von etwa 30 Hz entsprechend einer Scheiben-Rotation von etwa 180 U/min während 35 Sekunden und in der zweiten Nachphase mit elektrischem Strom einer Frequenz von etwa 60 Hz entsprechend einer Scheiben-Rotation von etwa 360 U/min während 25 Sekunden angetrieben wurde.

Zur Aufrechterhaltung einer Standzeit des Druckfilters in wirtschaftlich vertretbarer Höhe war es erforderlich, das Druckfilter nach jeweils 300 Filtrationszyklen mit 70 %iger Phosphorsäure mit einer Temperatur von 80° C zu spülen.

**Patentansprüche**

1. Verfahren zum Entfernen von bei der Filtration von Suspensionen aus der Fällungsreinigung von Naßphosphorsäure angefallenem Filterkuchen von den Scheiben eines Druckfilters mit Zentrifugal-Kuchenaustrag, wobei die Scheiben des Druckfilters mittels eines Drehstromasynchronmotors in Rotation versetzt werden, dadurch gekennzeichnet, daß man einen zum Betreiben mit elektrischem Strom einer Frequenz von 5o Hz vorgesehenen, vierpoligen Drehstromasynchronmotor verwendet; daß man den Drehstromasynchronmotor in der 5 bis 15 Sekunden dauernden Anlaufphase mit elektrischem Strom einer Frequenz von 4 bis 7,5 Hz betreibt; und daß man in der 2o bis 4o Sekunden dauernden Endphase den Drehstromasynchronmotor zur Vergrößerung seiner Drehzahl mit elektrischem Strom einer Frequenz bis zu 67,5 Hz betreibt.

2. Verfahren nach Anspruch 1, dadurch gekennzeichnet, daß man den Drehstromasynchronmotor in einer der Anlaufphase folgenden Zwischenphase mit elektrischem Strom einer Frequenz von 15 bis 5o Hz betreibt.

3. Verfahren nach Anspruch 1 oder 2, dadurch gekennzeichnet, daß man den Drehstromasynchronmotor in einer der Endphase folgenden ersten Nachphase mit elektrischem Strom einer Frequenz von 15 bis 4o Hz betreibt.

4. Verfahren nach Anspruch 3, dadurch gekennzeichnet, daß man den Drehstromasynchronmotor in einer der ersten Nachphase folgenden zweiten Nachphase mit elektrischem Strom einer Frequenz bis zu 67,5 Hz betreibt.

5. Verfahren nach mindestens einem der Ansprüche 1 bis 4, dadurch gekennzeichnet, daß die Frequenz zum Betreiben des Drehstromasynchronmotors in der Anlaufphase 5 bis 6 Hz beträgt.

6. Verfahren nach mindestens einem der Ansprüche 1 bis 5, dadurch gekennzeichnet, daß die Zwischenphase 1o bis 2o Sekunden dauert.

7. Verfahren nach mindestens einem der Ansprüche 1 bis 6, dadurch gekennzeichnet, daß die erste Nachphase 2o bis 5o Sekunden dauert.

8. Verfahren nach mindestens einem der Ansprüche 1 bis 7, dadurch gekennzeichnet, daß die zweite Nachphase 1o bis 25 Sekunden dauert.

9. Vorrichtung zur Durchführung des Verfahrens nach mindestens einem der Ansprüche 1 bis 8, bestehenden aus einem Druckbehälter (1) mit Trübezulauf (2) und Filtratablauf (3), einer im Druckbehälter (1) zentrisch und vertikal angeordneten Filtratablaufwelle (4), an welcher mehrere Scheiben (5) horizontal und mit Abstand voneinander angeordnet sind, einem Austragsstutzen (9) für Filterkuchen und einem Getriebe (1o), welches einerseits mit dem unteren, aus dem Druckbehälter (1) herausragenden Ende der Filtratablaufwelle (4) kraftschlüssig und andererseits durch eine Kupplung (11) mit einem Drehstromasynchronmotor (12) verbunden ist, dadurch gekennzeichnet, daß die Kupplung (11) eine starre Kupplung ist; daß der Drehstromasynchronmotor (12) über einen Frequenzumformer (13) mit elektrischem Strom beaufschlagbar ist; und daß der Frequenzumformer (13) mit Hilfe eines Rechners (14) mit elektrisch programmierbarem Speicher steuerbar ist.

## Claims

1. Method for removing filter cake, which has arisen in the filtration of suspensions from the purification of wet phosphoric acid by precipitation, from the disks of a pressure filter with centrifugal cake discharge, the disks of the pressure filter being set in rotation by means of a three-phase asynchronous motor, which comprises using a four-pole three-phase asynchronous motor intended for running with electric current of a frequency of 50 Hz, running the three-phase asynchronous motor in the starting phase lasting for 5 to 15 seconds with electric current of a frequency of from 4 to 7.5 Hz, and running the three-phase asynchronous motor in the end phase, lasting 20 to 40 seconds, with electric current of a frequency of up to 67.5 Hz in order to increase its speed of rotation.

2. The method as claimed in claim 1, wherein the three-phase asynchronous motor is run, in an intermediate phase following the starting phase, with electric current of a frequency of from 15 to 50 Hz.

3. The method as claimed in claim 1 or 2, wherein the three-phase asynchronous motor is run, in a first final phase following the end phase, with electric current of a frequency of from 15 to 40 Hz.

4. The method as claimed in claim 3, wherein the three-phase asynchronous motor is run, in a second final phase following the first final phase, with electric current of a frequency of up to 67.5 Hz.

5. The method as claimed in at least one of claims 1 to 4, wherein the frequency for running the three-phase asynchronous motor in the starting phase is 5 to 6 Hz.

6. The method as claimed in at least one of claims 1 to 5, wherein the intermediate phase lasts for 10 to 20 seconds.

7. The method as claimed in at least one of claims 1 to 6, wherein the first final phase lasts for 20 to 50 seconds.

8. The method as claimed in at least one of claims 1 to 7, wherein the second final phase lasts for 10 to 25 seconds.

9. A device for carrying out the method as claimed in at least one of claims 1 to 8, comprising a pressure vessel (1) with pulp inlet (2) and filtrate outlet (3), a filtrate outflow shaft (4) which is arranged centrally and vertically in the pressure vessel (1) and on which a plurality of disks (5) are arranged horizontally and spaced apart from each other, a discharge branch (9) for filter cake and a gearbox (10) which is connected, on the one hand, frictionally to the lower end, protruding from the pressure vessel (1), of the filtrate outflow shaft (4) and, on the other hand, by a coupling (11) to a three-phase asynchronous motor (12), wherein the coupling (11) is a rigid coupling, and wherein the three-phase asynchronous motor (12) can be supplied with electric current via a frequency converter (13), and wherein the frequency converter (13) is controllable by means of a computer (14) with an electrically programmable memory.

**Revendications**

1. Procédé pour enlever le tourteau de filtration formé dans la filtration de suspensions de la purification par précipitation d'acide phosphorique du procédé par voie humide des disques d'un filtre-presse à décharge centrifuge des tourteaux, les disques du filtre-presse étant déplacés en rotation au moyen d'un moteur asynchrone triphasé, caractérisé en ce que l'on utilise un moteur asynchrone triphasé quadripolaire prévu pour fonctionner avec un courant électrique d'une fréquence de 50 Hz; en ce que l'on fait fonctionner le moteur asynchrone triphasé pendant la phase de démarrage d'une durée de 5 à 15 s avec un courant électrique d'une fréquence de 4 à 7,5 Hz; et en ce que l'on fait fonctionner le moteur asynchrone triphasé pendant la phase finale d'une durée de 20 à 40 s avec un courant électrique d'une fréquence allant jusqu'à 67,5 Hz pour augmenter sa vitesse de rotation.

2. Procédé selon la revendication 1, caractérisé en ce que l'on fait fonctionner le moteur asynchrone triphasé pendant une phase intermédiaire qui suit la phase de démarrage avec un courant électrique d'une fréquence de 15 à 50 Hz.

3. Procédé selon la revendication 1 ou 2, caractérisé en ce que l'on fait fonctionner le moteur asynchrone triphasé pendant une première post-phase qui suit la phase finale avec un courant électrique d'une fréquence de 15 à 40 Hz.

4. Procédé selon la revendication 3, caractérisé en ce que l'on fait fonctionner le moteur asynchrone triphasé pendant une seconde post-phase qui suit la première post-phase avec un courant électrique d'une fréquence allant jusqu'à 67,5 Hz.

5. Procédé selon l'une au moins des revendications 1 à 4, caractérisé en ce que la fréquence pour le fonctionnement du moteur asynchrone triphasé dans la phase de démarrage est de 5 à 6 Hz.

6. Procédé selon l'une au moins des revendications 1 à 5, caractérisé en ce que la phase intermédiaire dure 10 à 20 s.

7. Procédé selon l'une au moins des revendications 1 à 6, caractérisé en ce que la première post-phase dure 20 à 50 s.

8. Procédé selon l'une au moins des revendications 1 à 7, caractérisé en ce que la seconde post-phase dure 10 à 25 s.

9. Appareil pour la mise en oeuvre du procédé selon l'une au moins des revendications 1 à 8, consistant en un récipient résistant à la pression (1) ayant une arrivée de liqueur trouble (2) et une sortie de filtrat (3), un axe de sortie de filtrat (4) disposé axialement et verticalement dans le récipient résistant à la pression (1), sur lequel sont disposés horizontalement et à distance les uns des autres plusieurs disques (5), un support de décharge (9) pour le tourteau de filtration et une transmission (10) qui est reliée, d'une part, par l'effet de la gravité à l'extrémité inférieure de l'arbre de sortie de filtrat dépassant du récipient résistant à la pression (1) et, d'autre part, par un embrayage (11) à un moteur asynchrone triphasé (12), caractérisé en ce que le raccord (11) est un raccord rigide; en ce que le moteur asynchrone triphasé (12) peut recevoir du courant électrique par l'intermédiaire d'un convertisseur de fréquence (13); et en ce que le convertisseur de fréquence (13) peut être commandé à l'aide d'un calculateur (14) à enregistreur programmable électriquement.